# EUROPÄISCHE PATENTSCHRIFT

(11) **EP 0 788 624 B1**
(45) Veröffentlichungstag und Bekanntmachung des Hinweises auf die Patenterteilung: **26.08.1998**
(21) Anmeldenummer: 95934597.6
(22) Anmeldetag: 13.10.1995
(51) Int. Cl.: G05B 9/02, G01D 18/00, G01D 3/08, G05B 23/02

(54) **VERFAHREN ZUR ANALYSE EINES MESSWERTES SOWIE MESSWERTANALYSATOR ZUR DURCHFÜHRUNG DES VERFAHRENS**
PROCESS FOR ANALYSING A MEASUREMENT AND MEASUREMENT ANALYSER FOR IMPLEMENTING IT
PROCEDE D'ANALYSE D'UNE VALEUR MESUREE ET ANALYSEUR DE VALEUR MESUREE POUR LA MISE EN OEUVRE DE CE PROCEDE

(30) Priorität: 26.10.1994 DE 4438300
(43) Veröffentlichungstag der Anmeldung: 13.08.1997
(73) Patentinhaber: SIEMENS AKTIENGESELLSCHAFT, 80333 München (DE)
(72) Erfinder: SCHEIL, Hermann, D-91334 Hemhofen (DE)
(86) Internationale Anmeldenummer: DE9501420
(87) Internationale Veröffentlichungsnummer: WO9613764

(56) Entgegenhaltungen:
- US-A- 5 127 005
- MEASUREMENT AND CONTROL, Bd. 22, Nr. 5, Juni 1989 LONDON GB, Seiten 132-141, W.G. CUMMINGS 'Local sensor validation'
- ADVANCES IN INSTRUMENTATION, Bd. Part.1, 1988 RESEARCH TRIANGLE PARK US, Seiten 133-149, I.J. KING ET AL. 'Power plant on-line diagnostic system for turbines, generators and water chemistry'
- PATENT ABSTRACTS OF JAPAN vol. 16 no. 527 (P-1447) ,29.Oktober 1992 & JP,A,04 198729 (TOSHIBA) 20.Juli 1992,
- AUTOMATISIERUNGSTECHNIK - AT, Bd. 36, Nr. 11, November 1988 MUNCHEN DE, Seiten 421-426, R. ISERMANN 'Wissensbasierte Fehlerdiagnose technischer Prozesse'

## Beschreibung

Die Erfindung bezieht sich auf ein Verfahren zur Analyse eines Meßwertes, der in einem Anlagenprozeß von einem Meßsystem ermittelt und an einem ersten Vergleichspunkt anhand von für das Meßsystem spezifischen Kenngrößen auf Plausibilität geprüft wird. Sie bezieht sich weiter auf einen Meßwertanalysator zur Durchführung des Verfahrens.

In technischen Anlagen, insbesondere in Kraftwerksanlagen, werden zunehmend Automatisierungssysteme zur Steuerung sowie Analyse- und Diagnosesysteme zur Überwachung des Anlagenprozesses eingesetzt. Mit zunehmenden Überwachungsaufgaben wachsen aber auch die Anforderungen an die Analyse- und Diagnosesysteme, die z.B. einen aus einer Turbine und einem Generator aufgebauten Turbosatz als Teil der Kraftwerksanlage überwachen. Dabei wird üblicherweise angenommen oder davon ausgegangen, daß ein von einer Meßwerterfassung und -verarbeitung auszuwertendes Meßsignal der Meßgröße oder dem physikalischen Zustand des Anlagenprozesses entspricht.

Der physikalische Zustand oder die Meßgröße wird üblicherweise innerhalb eines Meßsystems von einem Sensor erfaßt und entlang einer Meßstrecke mittels eines Umformers in das Meßsignal umgeformt, wobei das gegebenenfalls mittels eines Analog-Digital-Wandlers umgewandelte Meßsignal auf Plausibilität geprüft wird. Diese Plausibilitatsprüfung erfolgt in der Regel an einem Vergleichspunkt anhand von für das Meßsystem spezifischen Kenngrößen. Diese wiederum sind aus bekannten Größen des Sensors und des Umformers sowie des Analog-Digital-Wandlers und der Meßstrecke des Meßsystems, wie z.B. Temperaturbereich, Signal- oder Meßbereich, Toleranzbereich, Signal-Rauschabstand und/oder Umgebungseinflüssen, und aus einer Überwachung der Stromversorgung des Meßsystems abgeleitet. Für eine solche von einer Übereinstimmung zwischen dem Meßsignal und der Meßgröße ausgehenden Annahme bieten jedoch auf einer reinen Plausibilitätsprüfung beruhende Überwachungsmethoden keine ausreichende Sicherheit hinsichtlich der Fehlerfreiheit eines erfaßten Meßwerts. Denn einerseits ist jedes Meßsignal grundsätzlich fehlerbehaftet. Andererseits kann ein durch Umwelteinflüsse und/oder durch Veränderungen im Meßsystem bedingter systematischer Fehler nicht erkannt werden, do z.B. eine Meßsignaldrift, die innerhalb eines aus den Kenngrößen abgeleiteten Toleranzbereichs liegt.

Der Erfindung liegt daher die Aufgabe zugrunde, ein Verfahren zur Analyse oder Aufarbeitung eines Meßwertes anzugeben, mit dem systembedingte Fehler selektiert und bewertet werden können. Dies soll bei einem zur Durchführung des Verfahrens geeigneten Meßwertanalysator mit einfachen Mitteln erreicht werden.

Bezüglich des Verfahrens wird diese Aufgabe erfindungsgemäß dadurch gelöst, daß an einem zweiten Vergleichspunkt der Meßwert anhand von für den Anlagenprozeß charakteristischen Regeln hinsichtlich seiner Konsistenz mit unabhängig vom Meßwert ermittelten Meßparametern geprüft wird, wobei abhängig vom Ergebnis dieser Überprüfung ein Konfidenzfaktor für den Meßwert ermittelt wird.

Die Erfindung geht dabei von der Überlegung aus, daß nach erfolgter Plausikilitätsprüfung anhand eines aus den Kenngrößen des Meßsystems erstellten Musters des Sensors und der Meßstrecke keine zuverlässige Aussage hinsichtlich des Wahrheitsgehalts des ermittelten Meßwertes getroffen werden kann. Vielmehr ist das Ergebnis dieser Plausibiltätsprüfung nach Passieren des ersten Vergleichspunktes nochmals auf der Grundlage weiterer oder anderer, über die der Plausibilitätsprüfung anhand des Meßsystem-Musters hinausgehender Kriterien zu überprüfen. Erfolgt diese Übereprüfung anhand einer Gegenprüfung mit den ermittelten Meßwert reprodusierenden Meßparametern, die vorzugsweise ebenfalls nach diesem Verfahren analysiert oder geprüft werden, so kann eine Aussage über die Sicherheit oder Fehlerwahrscheinlichkeit des Meßwerts ermittelt werden.

Dadurch, daß die Gegenprüfung im Hinblick auf Konsistenz des ermittelten Meßwerts mit solchen unabhängig vom Meßwert ermittelten Meßparametern erfolgt, aus denen der dem Meßwert zugrundeliegende Zustand ableitbar ist, ist eine unabhängig von der Ermittlung des Meßwerts herleitbare Referenzaussage gegeben. Das Ergebnis eines Vergleichs dieser Referenzaussage, d.h. einem entsprechenden Referenzwert, mit dem ermittelten Meßwert, ist dann die Grundlage für eine Bewertung oder Wichtung des Meßwerts. Dazu wird anhand von geeigneten Algorithmen aus den unabhängig vom Meßwert ermittelten Meßparametern ein verfahrenstecnnisches Regelwerk mit für den Anlagenprozeß charakteristischen Regeln abgeleitet. In dieses Regelwerk wird dann vorzugsweise auch der ermittelte Meßwert aufgenommen, so daß eine ständige Aktualisierung der Regeln erfolgt.

Bezüglich des Meßwertanalysators mit einem ersten Vergleichsbaustein, der mit einem Kenngrößenspeicher für ein den Meßwert ermittelndes Meßsystem verbunden ist, wird die genannte Aufgabe erfindungsgemäß gelöst durch einen zweiten Vergleichsbaustein, der einerseits mit dem ersten Vergleichsbaustein und andererseits mit einem Datenspeicher verbunden ist, in dem mindestens auch diejenigen unabhängig vom Meßwert ermittelten Meßparameter hinterlegt sind, aus denen anhand der den Anlagenprozeß charakterisierenden verfahrenstechnischen Regeln ein Referenz- oder Sollwert - und damit auch ein Wichtungsfaktor - für den Meßwert ableitbar ist, wobei der zweite Vergleichsbaustein mit einem Bewertungsbaustein zur Ermittlung eines Konfidenzfaktors für den Meßwert verbunden ist.

Der Wichtungs- oder Konfidenzfaktor wird vorzugsweise in einem mit dem zweiten Vergleichsbaustein verbundenen Bewertungsbaustein anhand von Expertenwissen ermittelt und anschließend vor oder während einer weiteren Meßwertverarbeitung dem Meßwert zugeordnet.

Ein Ausführungsbeispiel der Erfindung wird anhand einer Zeichnung näher erläutert. Darin zeigen:
- Figur 1: ein Prinzipschaltbild eines Meßwertanalysators, und
- Figur 2: ein Flußdiagramm der Analyse und Aufbereitung eines Meßwertes.

Einander entsprechende Teile sind in beiden Figuren mit den gleichen Bezugszeichen versehen.

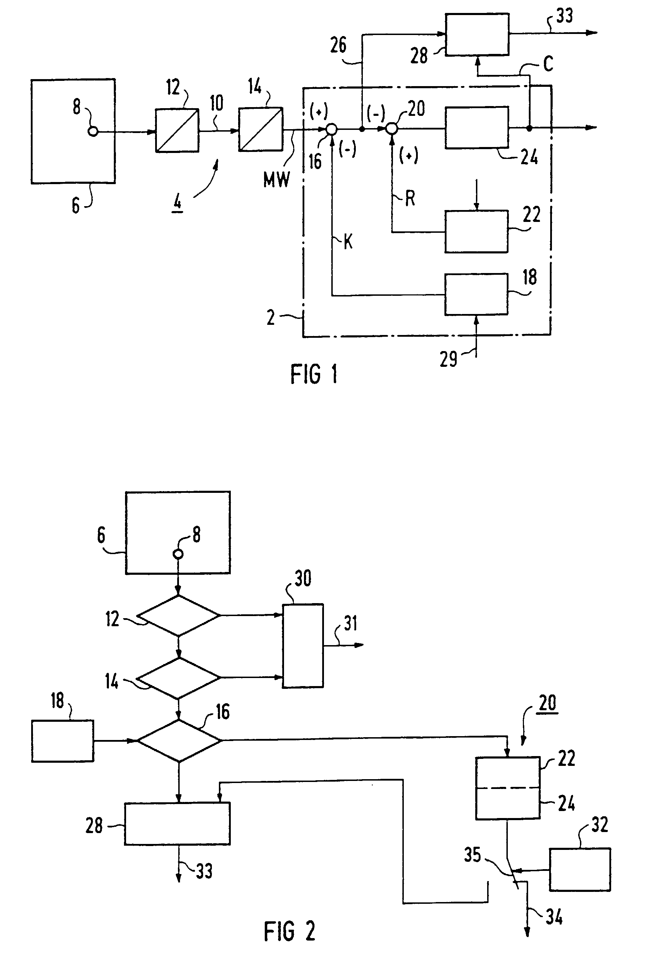

Figur 1 zeigt ein Prinzipschaltbild des Meßwertanalysators 2, dem über ein Meßsystem 4 ein in einem nur schematisch angedeuteten Anlagenprozeß 6 erfaßter Meßwert MW zugeführt wird. Das Meßsystem 4 umfaßt einen Meßsensor 8, der einen bestimmten physikalischen Zustand des Anlagenprozesses 6, z.B. eine Temperatur, aufnimmt. Es umfaßt außerdem entlang einer Meßstrecke 10 einen Umformer 12 zur Erzeugung eines Meßsignals und einen Analog/Digital-Wandler 14. Bei dem Anlagenprozeß 6 handelt es sich z.B. um die in einem Turbosatz verfahrenstechnisch realisierte Umwandlung thermischer Energie in elektrische Energie.

Der Meßwertanalysator 2 weist einen ersten Vergleichsbaustein 16 und einen mit diesem verbundenen Kenngrößenspeicher 18 für das Meßsystem 4 auf. Der Meßwertanalysator 2 weist außerdem einen zweiten Vergleichsbaustein 20 auf, der mit dem ersten Vergleichsbaustein 16 und mit einem Datenspeicher 22 für unabhängig vom Meßwert MW ermittelte Meßparameter sowie mit einem Bewertungsbaustein 24 verbunden ist. Zwischen dem ersten Vergleichsbaustein oder Vergleichspunkt 16 und dem zweiten Vergleichsbaustein oder Vergleichspunkt 20 ist ein Abzweig 26 vorgesehen, der in einen Baustein 28 zur Meßwertverarbeitung führt.

Der von dem Meßsystem 4 an den Meßwertanalysator 2 abgegebene Meßwert MW wird mittels Kenngrößen K aus dem Kenngrößenspeicher 18 am ersten Vergleichspunkt 16 auf Plausibilität geprüft. Diese Plausibilitätsprüfung erfolgt anhand von bekannten Größen des Meßsystems 4, d.h. zum Beispiel anhand von Herstellerangaben bezüglich des Sensors 8 und des Umformers 12 sowie des Analog/Digital-Wandlers 14. Aus diesen Herstellerangaben und aus aus Basismessungen abgeleiteten Kennlinien sowie aus Umgebungseinflüssen oder -bedingungen, wie Luftfeuchtigkeit und Temperatur, werden die Kenngrößen K algorithmisch ermittelt und in Form eines Musters des Meßsystems 4 im Kenngrößenspeicher 18 hinterlegt. Außerdem wird ein Muster der Meßstrecke 10 erstellt und ebenfalls im Kenngrößenspeicher 18 abgespeichert. Die Eingabe dieser Eigenschaften des Meßsystems 4 in den Kenngrößenspeicher 18 ist durch den Pfeil 29 angedeutet.

Wie in dem Flußdiagramm gemäß Figur 2 veranschaulicht ist, erfolgt mittels des Meßwertanalysators 2 zunächst eine Zustandsprüfung des Meßwertumformers 12 und des Analog/Digital-Wandlers 14. Für den Fall, daß der Meßumformer 12 und/oder der Analog/Digital-Wandler 14 ausfällt, erfolgt über einen Meldebaustein 30 eine Meldung und gegebenenfalls - wie durch den Pfeil 31 angedeutet - eine Meßwertaustastung. Arbeiten sowohl der Meßwertumformer als auch der Analog/Digital-Wandler 14 bestimmungsgemäß, so wird der Meßwert MW mit dem aus den Kenngrößen K hergeleiteten Muster verglichen. Anhand des Musters wird zunächst erkannt, ob der Meßwert MW plausibel ist, d.h. ob er z.B. zwischen einer vorgegebenen Ober- und Untergrenze liegt. Hier wird z.B. auch festgestellt, ob der Gradient des Meßwertes MW im Vergleich zur möglichen zeitlichen Änderung des gemessenen physikalischen Zustands des Anlagenprozesses 6 plausibel ist. Mit anderen Worten: Ändert sich z.B. der Meßwert MW schneller als sich der entsprechende physikalische Zustand ändern kann, so fällt der Meßwert MW oder das Meßsignal aus dem Muster heraus und es erfolgt eine Fehlermeldung. Eine Fehlermeldung erfolgt z.B. auch, wenn in einer sogenannten life-zero-Überwachung des Meßsystems 4 der Meßwert MW eine gegenüber dem eigentlichen Null-Punkt verschobene Untergrenze des Meßsystems 4 unterschreitet. Auch in diesem Fall wird der Meßwert MW als nicht plausibel erkannt. Andernfalls wird ein als plausibel erkannter Meßwert MW über den Zweig 26 (Figur 1) der weiteren Meßwertverarbeitung 28 zugeführt.

Gleichzeitig wird der anhand der Mustererkennung plausible Meßwert MW dem zweiten Vergleichspunkt 20 zugeführt und dort mit für den Anlagenprozeß 6 charakteristischen, verfahrenstechnischen Regeln R verglichen. Dazu ist in dem Datenspeicher 22 ein Regelwerk hinterlegt, dessen Regeln anhand von Expertenwissen aus unabhängig von dem Meßwert MW ermittelten Meßparametern aufgestellt sind. Anhand dieser für den Anlagenprozeß 6 charakteristischen Regeln R wird der Meßwert MW zunächst hinsichtlich seiner Konsistenz mit den unabhängig vom Meßwert MW aus dem Anlagenprozeß 6 ermittelten Meßparametern geprüft.

Fordert zum Beispiel die Mustererkennung, daß ein bestimmter Temperaturwert zwischen 20° C und 50° C liegen muß, und gibt der entsprechende Meßwert MW z.B. eine Temperatur T von 30° C an, so passiert dieser Meßwert MW den ersten Vergleichspunkt 16. Wird nun in diesem Beispiel weiter angenommen, daß der Meßwert MW an einem Rohr gemessen worden ist, das von heißem Dampf mit einem Dampfdruck p von z.B. 10 bar und einer Strömungsgeschwindigkeit v von z.B. 3 m/s und einer Temperatur T' von z.B. 50° C als Meßparameter durchströmt wird, so erfolgt anhand der Regeln R nach einem vorgegebenen Algorithmus eine Ableitung oder Reproduktion des Meßwertes MW aus diesen Meßparametern p, v, T'. Ein anhand dieser Meßparameter p, v, T' hergeleiteter Referenz- oder Sollwert wird am zweiten Vergleichspunkt 20 mit dem tatsächlich erfaßten Meßwert MW verglichen. Weicht der Meßwert MW von diesem Referenzwert ab, so erfolgt in dem Bewertungsbaustein 24 eine Bewertung des Meßwertes MW. Dabei wird anhand von in einer Wissensbasis 32 (Figur 2) hinterlegtem Expertenwissen ein Konfidenzfaktor C zur Wichtung des Meßwertes MW ermittelt. Der Konfidenzfaktor C wird dem Baustein 28 zur Meßwertverarbeitung zugeführt und zusammen mit dem Meßwert MW - wie durch den Pfeil 33 angedeutet - beispielsweise einem Diagnosesystem zugeführt. Dem Diagnosesystem wird somit der Meßwert MW mit einer Aussage über die Sicherheit oder den Fehlergrad des Meßwerts MW zugeführt, wobei bei einem Konfidenzfaktor C von z.B. 0,7 der Meßwert MW zu 30% falsch oder fehlerhaft ist. Liegt die aus dem Konfidenzfaktor C abgeleitete Fehlerwahrscheinlichkeit oberhalb eines einstellbaren Schwellwertes, so erfolgt - wie durch den Pfeil 34 angedeutet - eine entsprechende Meldung und eine Anzeige des Meßwerts MW sowie des Konfidenzfaktors C. Dies ist in Figur 2 durch einen Schalter 35 symbolisiert.

Mit diesem Analyseverfahren zur Aufbereitung des in dem Anlagenprozeß 6 erfaßten Meßwertes MW können vorteilhafterweise auch systematische Fehler des Meßsystems 4 erkannt werden, wobei insbesondere auch geringfügige Driftbewegungen des erfaßten Meßwertes MW über einen bestimmten Meßzeitraum erkannt werden. Somit ist durch die einen Fehlergrad des Meßwerts MW wiederspiegelnde Wichtung des Meßwertes MW eine besonders hohe Sicherheit bei einer Analyse und Diagnose des zu überwachenden Prozesses 6 gewährleistet.

## Patentansprüche

1. Verfahren zur Analyse eines Meßwertes (MW), der in einem Anlagenprozeß (6) von einem Meßsystem (4) ermittelt und an einem ersten Vergleichspunkt (16) anhand von für das Meßsystem (4) spezifischen Kenngrößen (K) auf Plausibilität geprüft wird,
**dadurch gekennzeichnet**, daß an einem zweiten "Vergleichspunkt (20) der Meßwert (MW) anhand von für den Anlagenprozeß (6) charakteristischen Regeln (R) hinsichtlich seiner Konsistenz mit unabhängig vom Meßwert (MW) ermittelten Meßparametern geprüft wird, wobei abhängig vom Ergebnis dieser Überprüfung ein Konfidenzfaktor (C) für den Meßwert (MW) ermittelt wird.

2. Verfahren nach Anspruch 1,
**dadurch gekennzeichnet**, daß die für den Anlagenprozeß (6) charakteristischen Regeln (R) durch den Meßwert (MW) aktualisiert werden.

3. Meßwertanalysator, insbesondere zur Durchführung des Verfahrens nach einem der Ansprüche 1 oder 2, mit einem ersten Vergleichsbaustein (16), der mit einem Kenngrößenspeicher (18) für ein den Meßwert (MW) ermittelndes Meßsystem (4) verbunden ist,
**gekennzeichnet durch** einen zweiten Vergleichsbaustein (20), der verbunden ist mit dem ersten Vergleichsbaustein (16) und mit einem Datenspeicher (22) für unabhängig vom Meßwert (MW) ermittelte Meßparameter, aus denen mittels den Anlagenprozeß (6) charakterisierenden Regeln (R) ein Sollwert für den Meßwert (MW) ableitbar ist, wobei der zweite Vergleichsbaustein (20) mit einem Bewertungsbaustein (24) zur Ermittlung eines Konfidenzfaktors (C) für den Meßwert (MW) verbunden ist.

## Claims

1. Method for analysing a measurement value (MW) which is identified in a system process (6) of a measurement system (4) and is tested for plausibility at a first comparison point (16) with reference to characteristic variables (K) which are specific to the measurement system (4), characterized in that, the consistency of the measurement value (MW) with measurement parameters identified independently of the measurement value (MW) is tested at a second comparison point (20) with reference to rules (R) which are characteristic of the system process (6), a confidence factor (C) for the measurement value (MW) being identified as a function of the result of this test.

2. Method according to Claim 1, characterized in that the rules (R) which are characteristic of the system process (6) are updated by the measurement value (MW).

3. Measurement value analyser, in particular for carrying out the method according to one of Claims 1 or 2, with a first comparison module (16) which is connected to a characteristic variable memory (18) for a measurement system (4) which identifies the measurement value (MW), characterized by a second comparison module (20) which is connected to the first comparison module (16) and to a data memory (22) for measurement parameters identified independently of the measurement value (MW), from which measurement parameters a desired value for the measurement value (MW) can be derived by means of rules (R) which characterize the system process (6), the second comparison module (20) being connected to an evaluation module (24) for determining a confidence factor (C) for the measurement value (MW).

## Revendications

1. Procédé pour l'analyse d'une valeur mesurée (MW) qui est déterminée dans un processus industriel (6) par un système de mesure (4) et dont la vraisemblance est testée en un premier point de comparaison (16) à l'aide de grandeurs caractéristiques (K) spécifiques au système de mesure (4),
caractérisé par le fait que l'on teste la valeur mesurée (MW) en un deuxième point de comparaison (20) à l'aide de règles (R) caractéristiques du processus industriel (6) du point de vue de sa cohérence avec des paramètres de mesure déterminés indépendamment de la valeur mesurée (MW), un facteur de confiance (C) étant déterminé pour la valeur mesurée (MW) en fonction du résultat de ce test.

2. Procédé selon la revendication 1,
caractérisé par le fait que l'on actualise avec la valeur mesurée (MW) les règles (R) caractéristiques du processus industriel (6).

3. Analyseur de valeur mesurée, notamment pour la mise en oeuvre du procédé selon l'une des revendications 1 ou 2, comportant un premier composant de comparaison (16) qui est relié à une mémoire de grandeurs caractéristiques (18) pour un système de mesure (4) déterminant la valeur mesurée (MW),
caractérisé par un deuxième composant de comparaison (20) qui est relié au premier composant de comparaison (16) et à une mémoire de données (22) destinée à des paramètres de mesure qui sont déterminés indépendamment de la valeur mesurée (MW) et à partir desquels une valeur de consigne pour la valeur mesurée (MW) peut être déduite au moyen de règles (R) caractérisant le processus industriel (6), le deuxième composant de comparaison (20) étant relié à un composant d'estimation (24) pour la détermination d'un facteur de confiance (C) pour la valeur mesurée (MW).
